# FASCICULE DE BREVET EUROPEEN

(11) **EP 3 745 578 B1**
(45) Date de publication et mention de la délivrance du brevet: **20.07.2022**
(21) Numéro de dépôt: 20177512.9
(22) Date de dépôt: 29.05.2020
(51) Int. Cl.: H02M 7/155, H02M 1/32

(54) **DÉCHARGE D'UN CONDENSATEUR ALTERNATIF**
ENTLADUNG EINES WECHSELKONDENSATORS
DISCHARGE FOR AN ALTERNATING CAPACITOR

(30) Priorité: 31.05.2019 FR 1905816
(43) Date de publication de la demande: 02.12.2020
(73) Titulaire: STMicroelectronics Ltd, Kowloon 999077 (HK)
(72) Inventeur: GONTHIER, Laurent, 10462 Taipei City (TW)
(74) Mandataire: Cabinet Beaumont

(56) Documents cités:
- EP-A2- 2 592 738
- US-A1- 2012 207 505
- US-A1- 2012 230 075
- US-A1- 2017 302 169

## Description

### Domaine technique

La présente description concerne de façon générale les circuits électroniques et plus particulièrement les circuits destinés à être reliés à une source de tension alternative, telle que le secteur du réseau de distribution d'électricité. La présente description s'applique plus particulièrement à des circuits comportant un condensateur alternatif.

### Technique antérieure

Dans de nombreuses applications, l'énergie prélevée sur le réseau de distribution électrique par des appareils qui y sont banchés est filtrée par un condensateur alternatif en amont d'un circuit de conversion de tension et/ou de correction du facteur de puissance. Ce condensateur est généralement directement connecté aux conducteurs de ligne et de neutre (ou entre deux phases) de l'alimentation alternative.

La présence de ce condensateur requiert de le décharger lorsque l'appareil est débranché du réseau. En effet, la charge qu'il contient au moment où l'appareil est débranché doit être évacuée ou dissipée pour des questions de sécurité électrique. Ce besoin est d'autant plus important que la puissance est élevée.

De nombreuses solutions existent mais sont souvent complexes et/ou couteuses.

Le document EP 2 592 738 décrit un procédé et un appareil pour mettre en œuvre un circuit de décharge de tension de borne d'entrée d'un convertisseur de puissance.

Le document US 2017/302169 décrit un dispositif de conversion de puissance.

Le document US 2012/207505 décrit un circuit de décharge et une alimentation de puissance.

Le document US 2012/230075 décrit un appareil de conversion de puissance et son procédé de conversion de puissance.

### Résumé de l'invention

Il existe un besoin pour un circuit de décharge d'un condensateur alternatif simple et peu onéreux.

Un mode de réalisation pallie tout ou partie des inconvénients des circuit électronique de décharge de condensateurs alternatifs.

Un mode de réalisation prévoit un procédé de commande tel que divulgué dans la revendication 1.

Un mode de réalisation prévoit un circuit tel que divulgué dans la revendication 2.

Selon un mode de réalisation, un des thyristors conduit en inverse pendant l'application desdits courants de gâchette.

Selon un mode de réalisation, lesdits courants sont appliqués pour décharger le condensateur alternatif lorsque ladite tension alternative cesse d'être appliquée aux électrodes du condensateur pendant une durée supérieure à un premier seuil, d'au moins une demi-période de la tension alternative.

Selon un mode de réalisation, lesdits courants cessent d'être appliqués si le circuit ne détecte pas qu'une tension d'entrée devient inférieure à un deuxième seuil pendant une durée supérieure à un troisième seuil, ledit troisième seuil étant supérieur au premier.

Selon un mode de réalisation, lesdits courants de gâchette sont appliqués pendant une durée supérieure à celle d'une demi-période de la tension alternative destinée à être appliquée aux deux électrodes du condensateur.

Selon un mode de réalisation, lesdits courants de gâchette sont appliqués pendant une durée de quelques dizaines de millisecondes à quelques centaines de millisecondes.

Selon un mode de réalisation, lesdits courants de gâchette sont appliqués de manière continue.

Selon un mode de réalisation, lesdits courants de gâchette sont appliqués par impulsions.

Selon un mode de réalisation, lesdits thyristors sont commandés à partir d'un circuit de détection d'absence de tension entre des bornes d'application de la tension alternative.

Selon un mode de réalisation, les thyristors font partie d'un pont de redressement de la tension alternative.

Selon un mode de réalisation, en présence de la tension alternative, les thyristors sont commandés de façon impulsionnelle pour redresser la tension alternative.

Selon un mode de réalisation, les thyristors reçoivent une impulsion de commande simultanée à chaque alternance de la tension alternative.

Selon un mode de réalisation, les thyristors reçoivent chacun une impulsion de commande une alternance sur deux de la tension alternative.

Selon un mode de réalisation, une sortie du pont alimente une alimentation à découpage, lesdits courants de gâchette étant générés sous commande d'un circuit de commande de l'alimentation à découpage.

Selon un mode de réalisation, les thyristors sont des thyristors à gâchette de cathode.

Selon un mode de réalisation, les thyristors sont des thyristors à gâchette d'anode.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple de système de conversion d'énergie du type auquel s'appliquent les modes de réalisation décrits ;
la figure 2 représente, de façon très schématique, un mode de réalisation d'un système ou circuit de conversion d'énergie équipé d'une fonction de décharge d'un condensateur alternatif ;
la figure 3 illustre, par des vues (A) et (B), le phénomène de conduction inverse d'un thyristor ;
la figure 4 illustre, par des vues (A), (B), (C), (D) et (E), le fonctionnement du système de la figure 2 lors de la disparition d'une tension alternative d'alimentation ;
la figure 5 représente, de façon très schématique, un autre mode de réalisation d'un système ou circuit de conversion d'énergie équipé d'une fonction de décharge d'un condensateur alternatif ;
la figure 6 représente, de façon très schématique, encore un autre mode de réalisation d'un système ou circuit de conversion d'énergie équipé d'une fonction de décharge d'un condensateur alternatif ; et
la figure 7 représente, de façon très schématique, encore un autre mode de réalisation d'un système ou circuit de conversion d'énergie équipé d'une fonction de décharge d'un condensateur alternatif.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le convertisseur d'énergie DC-AC ou DC-DC alimenté par le circuit décrit ainsi que la commande d'un tel convertisseur d'énergie n'ont pas été détaillés, les modes de réalisation décrits étant compatibles avec les convertisseurs usuels et les commandes usuelles de tels convertisseurs.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

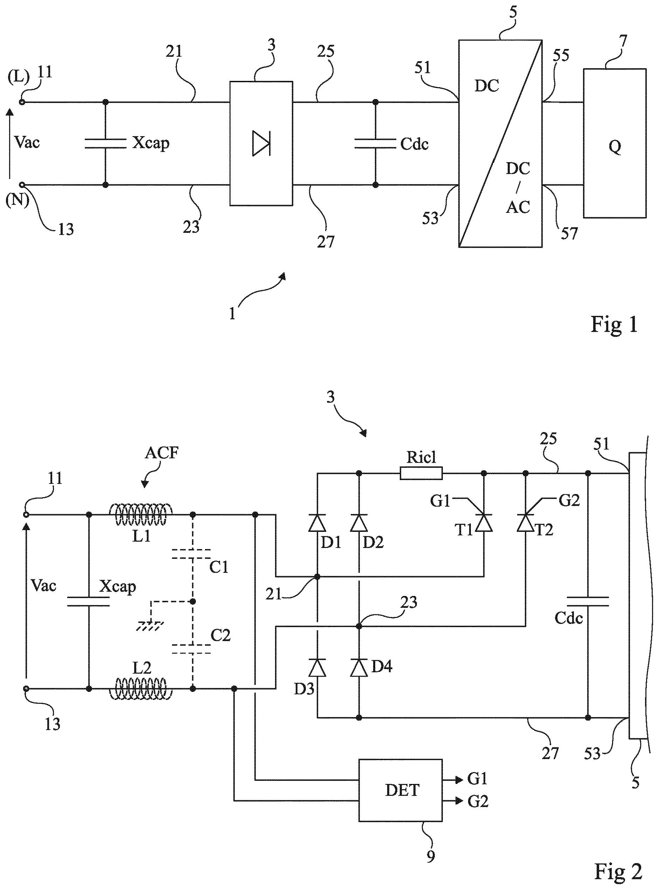

La figure 1 représente un exemple de système 1 de conversion d'énergie du type auquel s'appliquent les modes de réalisation décrits.

Un tel système de conversion 1 est basé un redressement mono ou double alternance d'une tension alternative Vac d'alimentation, suivi d'une conversion continu-continu (DC/DC) ou continu-alternatif (DC/AC) pour alimenter une charge (Q).

Schématiquement, la tension alternative Vac est appliquée entre deux bornes d'entrée 11 (L) et 13 (N) reliées à des bornes 21 et 23 d'entrée alternative d'un pont redresseur 3. La tension Vac est, par exemple, la tension alternative ou tension secteur d'un réseau de distribution d'électricité 230V/50 ou 60Hz, ou 110V/50 ou 60Hz. Typiquement, les bornes 11 et 13 sont constituées de broches d'une fiche de raccordement ou branchement du système 1 à une prise d'une installation électrique.

Des bornes de sortie redressée 25 et 27 du pont redresseur sont reliées à des bornes d'entrée 51 et 53 d'un circuit 5 de conversion DC/DC ou DC/AC. Des bornes 55 et 57 de sortie (continue ou alternative selon le mode de réalisation) du circuit 5 fournissent une tension d'alimentation à une charge 7 (Q). Un condensateur continu Cdc relie, de préférence connecte, les bornes 25 et 27 pour lisser la tension redressée et fournir une tension redressée en entrée du circuit 5.

Dans les applications visées par la présente description, un condensateur alternatif Xcap relie, de préférence connecte, les bornes 11 et 13 en amont de tout élément du système de conversion 1 et en particulier en amont du pont 3. Le rôle du condensateur Xcap est de filtrer la tension alternative Vac afin notamment d'éliminer d'éventuelles perturbations haute fréquence (à une fréquence supérieure à la fréquence de la tension alternative Vac).

La présence d'un condensateur alternatif d'entrée Xcap requiert de décharger ce condensateur lorsque le système est débranché de l'installation électrique, pour des raisons de sécurité en cas de contact avec les bornes 11 et 13 lorsque le système est débranché. Ce besoin est d'autant plus présent que la puissance du système est importante. En effet, l'énergie emmagasinée dans ce condensateur risque autrement d'être déchargée par le corps d'un utilisateur touchant ces deux bornes.

On a déjà proposé de nombreuses solutions pour décharger un condensateur alternatif à la disparition de la tension alternative d'entrée.

Une première catégorie de solutions fait appel à des composants passifs, le condensateur Xcap faisant alors partie d'un filtre alternatif dont une résistance de faible valeur est connectée en parallèle au condensateur et dissipe l'énergie qu'il contient lorsque le système est débranché. Un inconvénient de ces solutions est une dissipation permanente d'énergie dans l'application.

Une deuxième catégorie de solutions fait appel à des composant actifs pour contrôler une décharge du condensateur alternatif lorsque la tension d'alimentation Vac disparaît. Ces solutions requièrent généralement des circuits et composants supplémentaires qui accroissent le cout du système ou de l'application.

Selon les modes de réalisation décrits, on prévoit de tirer profit d'une structure particulière de pont redresseur équipant le système de conversion d'énergie, à savoir un pont mixte ou un pont commandable.

Un pont redresseur, par exemple double alternance, est constitué de quatre branches reliant deux à deux chaque borne d'entrée à chaque borne de sortie, un élément de redressement (typiquement une diode) étant présent dans chaque branche.

Un pont commandable est un pont redresseur dans lequel deux des quatre branches (pont mixte) ou les quatre branches comportent, à la place d'une diode, un commutateur, typiquement un thyristor ou un SCR.

Un tel pont équipe généralement les systèmes de conversion d'énergie, soit en complément d'un pont non commandable afin de court-circuiter une résistance de limitation du courant d'appel, une fois que le système a démarré, soit afin d'assurer un chargement progressif d'un condensateur de sortie (soft start). Un tel pont peut aussi être utilisé sans la résistance de limitation du courant d'appel mais en utilisant les élément commandables du pont afin de charger progressivement les condensateurs en aval au démarrage du système.

Selon les modes de réalisation décrits, on prévoit d'utiliser les thyristors du pont pour décharger le condensateur alternatif lorsque le système est déconnecté du réseau d'alimentation.

On tire alors profit d'une caractéristique particulière d'un thyristor qui est de présenter, lorsqu'il est polarisé en inverse mais soumis à un courant de gâchette, un courant de fuite important,

La figure 2 représente, de façon très schématique, un mode de réalisation d'un système ou circuit de conversion d'énergie équipé d'une fonction de décharge d'un condensateur alternatif.

On retrouve :
des bornes d'entrée 11 et 13 d'application d'une tension alternative d'alimentation Vac ;
un condensateur alternatif Xcap relié, de préférence connecté, aux bornes 11 et 13 ;
un pont redresseur 3, par exemple double alternance, dont des bornes d'entrée alternative 21 et 23 sont respectivement reliées aux bornes 11 et 13 et dont des bornes de sortie redressée 25 et 27 sont respectivement reliées, de préférence connectées, à des bornes d'entrée 51 et 53 d'un convertisseur DC/DC ou DC/AC 5 ; et
un ou plusieurs condensateurs continus Cdc reliés, de préférence connectés, aux bornes 25 et 27.

Dans l'exemple de la figure 2, on suppose la présence d'un filtre alternatif ACF (représenté en pointillés) entre les bornes 11 et 12 et les bornes 21 et 23. Un tel filtre optionnel comporte généralement des élément inductifs et capacitifs et sert à éliminer des parasites électriques présents sur les lignes du réseau de distribution d'électricité. Par exemple une inductance L1 relie, de préférence connecte, les bornes 11 et 21 et une inductance L2 relie, de préférence connecte, les bornes 13 et 23. Un condensateur C1 relie, de préférence connecte, la borne 21 à la masse et un condensateur C2 relie, de préférence connecte la borne 23 à la masse.

Le convertisseur 5 est, de préférence une alimentation à découpage commandée à une fréquence nettement plus élevée (avec un rapport de l'ordre de 1000 à 10000) que la fréquence de la tension Vac.

Selon les modes de réalisation décrits, le pont redresseur 3 est un pont double alternance associé à un demi-pont commandable, ou un pont mixte associé à un demi-pont à diodes, ce qui revient au même.

Dans l'exemple de la figure 2, le pont 3 comporte :
deux diodes D1 et D2 reliant, de préférence connectant, respectivement les bornes 21 et 23 à une première borne de la résistance Ricl de limitation du courant d'appel dont l'autre borne est reliée, de préférence connectée, à la borne 25 ;
deux diodes D3 et D4 reliant, de préférence connectant, respectivement les bornes 21 et 23 à la borne 27 ;
deux thyristors T1 et T2, ici à gâchette de cathode, reliant, de préférence connectant, respectivement les bornes 21 et 23 à la borne 25.

Au démarrage du circuit, c'est-à-dire lors de sa mise sous tension Vac, les thyristors T1 et T2 ne sont pas commandés et le redressement de la tension Vac passe par la résistance Ricl. Une fois que le circuit a démarré et est en régime établi, les thyristors T1 et T2 sont alternativement commandés selon l'alternance de la tension Vac et assurent la fonction de redressement du demi-pont supérieur. A chaque alternance, un seul des deux thyristors (celui qui est polarisé en direct) est passant. La commande des thyristors est impulsionnelle, c'est-à-dire que leurs gâchettes reçoivent une impulsion de courant à chaque alternance de la tension Vac. Par impulsion, on entend un signal d'une durée inférieure à la durée d'une alternance de la tension Vac, de préférence dans un rapport d'au moins 10. L'utilisation de thyristors permet de court-circuiter la résistance Ricl lorsque le système est en régime établi. Lorsque cette résistance n'est pas utilisée, ainsi que les diodes D1 et D2, les thyristors T1 et T2 peuvent permettre de réaliser une commande en angle de phase pour assurer une charge progressive du ou des condensateurs Cdc.

Le fonctionnement du système au démarrage et en régime établi est en lui-même usuel. On notera que grâce au pont mixte et à la commande particulière décrite, le circuit est dépourvu de résistance en parallèle sur le condensateur alternatif Xcap.

Lors d'une mise hors tension du circuit, par exemple, lorsqu'il est débranché d'une source de fourniture de la tension Vac, on prévoit de continuer à commander le pont 3, mais avec une commande particulière, à savoir que l'on applique des courants de gâchette continus simultanément aux deux thyristors. Par signal de commande continu, on entend, par opposition à impulsionnel, un état maintenu pendant une durée au moins égale, de préférence supérieure, à une alternance de la tension Vac. Ainsi, l'un des thyristors T1 et T2 conduit en étant polarisé en direct tandis que l'autre, bien que polarisé en inverse, présente un courant de fuite non négligeable. Comme, les deux thyristors sont en anti-série (interconnectés par une de leurs électrodes de même nature, c'est-à-dire qu'ils sont à anode commune ou à cathode commune), on peut alors considérer que le condensateur alternatif Xcap est court-circuité par les thyristors T1 et T2.

Si la polarisation du condensateur Xcap est positive côté borne 11 (mise hors tension sous une alternance positive avec les conventions prises aux figures), un courant de décharge du condensateur Xcap circule depuis son électrode située côté borne 11 jusqu'à son électrode située côté borne 13 :
à travers l'inductance L1 du filtre ACF si elle est présente ;
dans le thyristor T1 à l'état passant en direct ;
dans le thyristor T2 en inverse ; et
à travers l'inductance L2 du filtre ACF si elle est présente.

Si la polarisation du condensateur Xcap est négative côté borne 13 (mise hors tension sous une alternance négative avec les conventions prises aux figures), un courant de décharge du condensateur Xcap circule depuis son électrode située côté borne 13 jusqu'à son électrode située côté borne 11 :
à travers l'inductance L2 du filtre ACF si elle est présente ;
dans le thyristor T2 à l'état passant en direct ;
dans le thyristor T1 en inverse ; et
à travers l'inductance L1 du filtre ACF si elle est présente.

Ainsi, le condensateur Xcap se décharge, son énergie étant déchargée par dissipation dans les résistances série des thyristors T1 et T2 et le cas échéant dans les résistances intrinsèques des inductances L1 et L2. Bien que ces résistances soient faibles, on s'est aperçu qu'elles suffisaient à décharger le condensateur Xcap. En pratique un courant de quelques milliampères suffit à décharger suffisamment rapidement (en quelques millisecondes à quelques dizaines de millisecondes) le condensateur Xcap.

La commande des thyristors T1 et T2 est assurée, au moment de la déconnection, par un circuit 9 (DET) de détection de la disparition de la tension Vac et de génération de courants de gâchette appliqués conjointement sur les gâchettes G1 et G2 des thyristors T1 et T2. Généralement, dans l'exemple de thyristors à gâchette de cathode, on injecte un courant dans leurs gâchettes. Toutefois, ce qui est décrit est compatible avec des thyristors à gâchette de cathode commandables par extraction d'un courant de leurs gâchettes. Le circuit 9 est relié, de préférence connecté, aux bornes 21 et 23 (ou aux bornes 11 et 13) pour détecter, par exemple, les passages par zéro de la tension Vac.

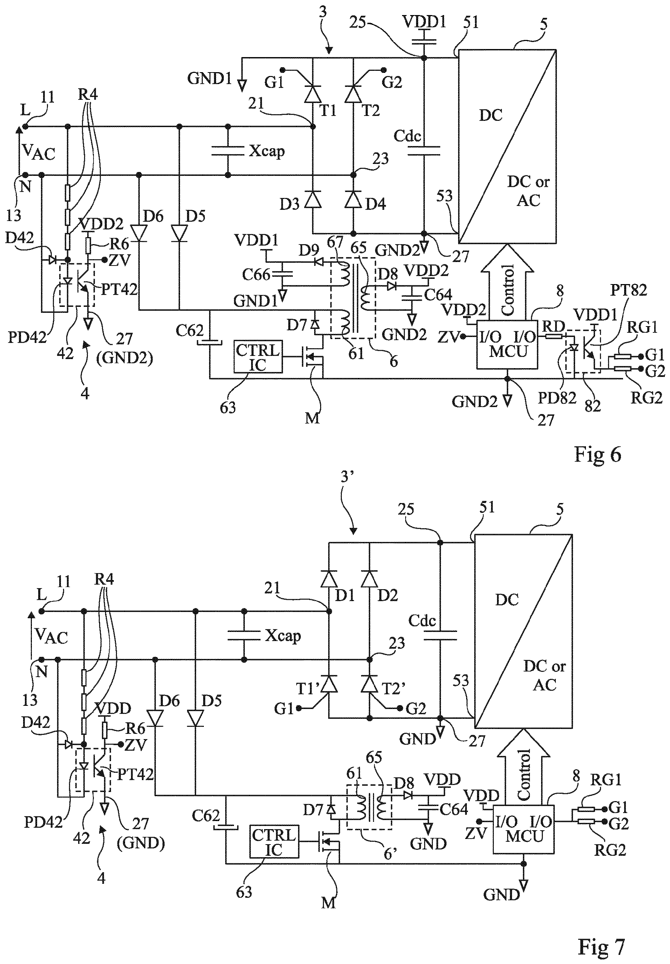

Le circuit 9 ainsi que les circuits de commande du convertisseur 5 (non représenté en figure 2) sont alimentés par une basse tension continue. Des exemples seront donnés ultérieurement en relation avec les figures 6 et 7.

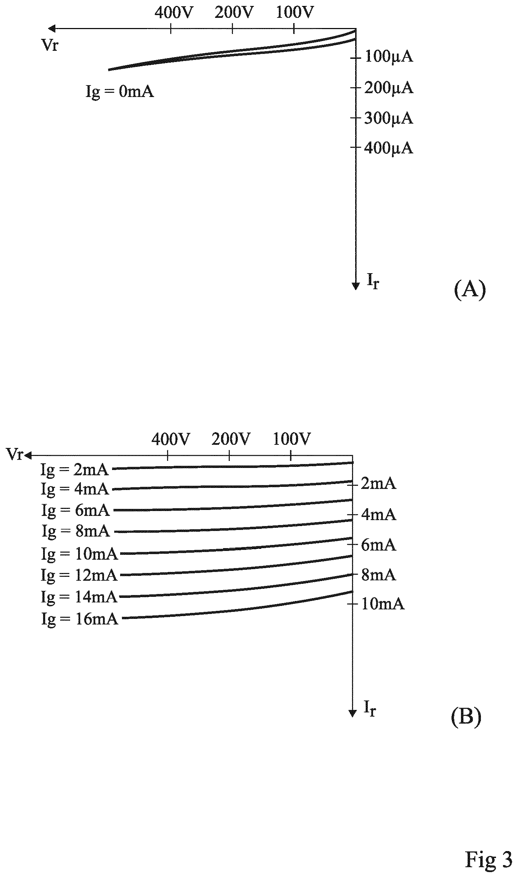

La figure 3 illustre, par des vues (A) et (B), le phénomène de conduction inverse d'un thyristor. La vue (A) illustre un exemple d'allure de courant inverse Ir (ou courant de fuite) en fonction de la tension inverse Vr (potentiel de cathode moins potentiel d'anode) aux bornes d'un thyristor lorsqu'aucun courant de gâchette Ig ne lui est appliqué. La vue (B) illustre des exemples d'allures de courant inverse Ir en fonction de la tension inverse Vr pour plusieurs valeurs de courants de gâchette Ig.

Comme l'illustre la vue (A) de la figure 3, le courant de fuite Ir est typiquement de l'ordre de la centaine de microampères quand aucun courant de gâchette n'est appliqué (Ig = 0 mA). Ce courant inverse croît légèrement en fonction de la tension inverse Vr. Un tel niveau de courant de fuite est parfaitement négligeable dans la plupart des applications utilisant de tels systèmes conversion d'énergie dans la mesure où les courants mis en œuvre pour l'application sont généralement de plusieurs dizaines de milliampères à plusieurs dizaines d'ampères.

Toutefois, un tel courant de fuite s'avère insuffisant pour décharger le condensateur Xcap suffisamment rapidement. Il faudrait typiquement plusieurs secondes, ce qui n'est pas acceptable en termes de sécurité électrique des utilisateurs.

Comme l'illustre la vue (B) de la figure 3, ce courant inverse Ir croît d'un facteur de l'ordre de 10 à 20 lorsqu'un courant de gâchette Ig de l'ordre de quelques milliampères est appliqué. Par exemple, le courant inverse Ir est :
de l'ordre de 2 mA pour un courant de gâchette de l'ordre de 6 mA ;
de l'ordre de 4 mA pour un courant de gâchette de l'ordre de 8 mA ;
de l'ordre de 6 mA pour un courant de gâchette de l'ordre de 12 mA ; et
de l'ordre de 10 mA pour un courant de gâchette de l'ordre de 16 mA.

Le courant inverse Ir croît légèrement avec l'augmentation de la tension inverse Vr, mais dans des proportions de l'ordre de 10 à 20 % entre 100 et 400 volts qui constitue la plage de tensions d'alimentation principalement visée. Ainsi, la décharge du condensateur Xcap peut s'effectuer nettement plus rapidement et de surcroit avec un courant suffisant au cours de la plus grande partie de la plage de décharge (jusqu'à quelques dizaines de volts)

On notera que, à la différence d'une commande pour la mise en conduction d'un thyristor polarisé en direct qui peut s'effectuer de façon impulsionnelle (une impulsion de quelques microsecondes par alternance la tension Vac suffit à rendre le thyristor passant), le courant de gâchette doit être appliqué de façon continue pour tirer profit de la conduction inverse.

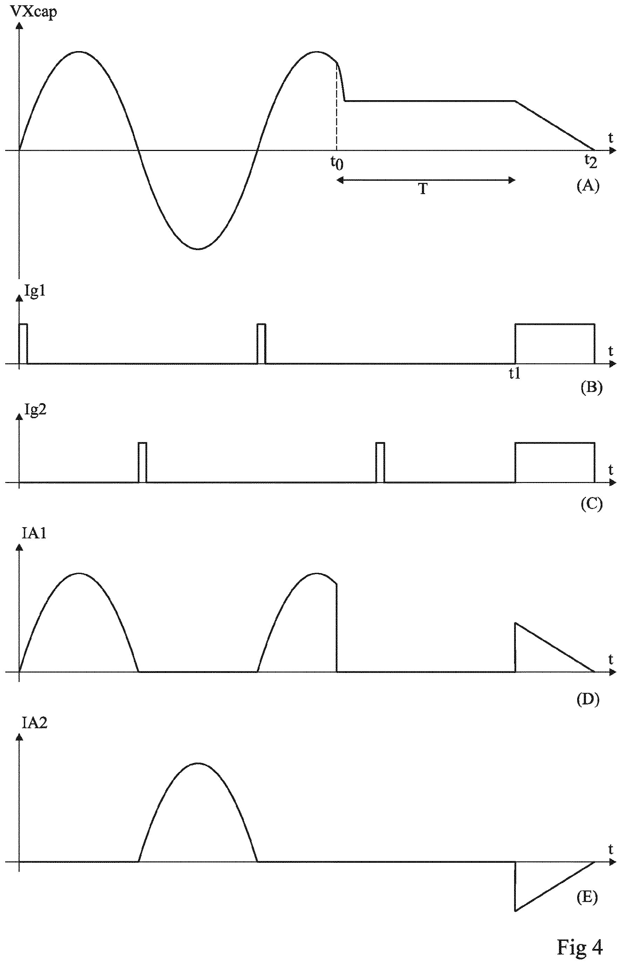

La figure 4 illustre, par des vues (A), (B), (C), (D) et (E), le fonctionnement du système de la figure 2. La vue (A) représente un exemple d'allure de la tension VXcap aux bornes du condensateur Xcap. La vue (B) représente un exemple d'allure du courant de gâchette Ig1 du thyristor T1. La vue (C) représente un exemple d'allure du courant de gâchette Ig2 du thyristor T2. La vue (D) illustre un exemple d'allure du courant IA1 dans le thyristor T1. La vue (E) illustre un exemple d'allure du courant IA2 dans le thyristor T2.

Par convention, on suppose que :
la tension VXcap est la différence de potentiel entre l'électrode côté borne 11 et l'électrode côté borne 13 ; et
le courant de gâchette Ig1 ou Ig2 est positif lorsqu'un courant est injecté dans la gâchette du thyristor concerné ;
le courant IA1 ou IA2 dans le thyristor est positif lorsqu'il entre par l'anode du thyristor concerné.

En régime établi, le thyristor T1 est rendu passant à chaque alternance positive de la tension alternative Vac, c'est-à-dire quand la tension VXcap est positive, et le thyristor T2 est rendu passant à chaque alternance négative de la tension Vac, c'est-à-dire quand la tension VXcap est négative. Dans l'exemple de la figure 4, on suppose une mise en conduction de thyristor au zéro de tension, c'est-à-dire que des impulsions positives de courant de gâchette sont appliquées au début de chaque alternance de mise en conduction du thyristor concerné. Dans l'exemple de la figure 4, par soucis de simplification, on ne considère pas le filtre ACF ni d'éventuelles autres sources de déphasage entre la tension et le courant. On suppose également que le convertisseur 5 absorbe un courant en phase avec la tension secteur, ce qui est le cas lorsque le convertisseur 5 assure également une fonction de correction du facteur de puissance du circuit complet. Dans ce cas, les courants IA1 et IA2 présentent des demi-alternances positives et négatives. La conduction du thyristor s'arrête quand le courant qui le traverse s'annule, quand la tension à ses bornes s'inverse.

La commande des thyristors T1 et T2 en régime établi est fournie par un circuit de commande, de préférence synchronisé sur la tension Vac. Un tel circuit (non représenté en figure 2) peut être un circuit dédié, un microcontrôleur, ou être inclut dans le circuit 9.

En régime établi, la tension VXcap s'inverse à chaque alternance (elle suit la tension Vac) et s'annule donc deux fois par période de la tension Vac.

On suppose qu'à un instant t0, la tension Vac disparait (pointillés en vue (A)). Cette disparition se traduit par une diminution brusque (plus rapide que la décroissance de la tension Vac) de la tension VXcap due au fonctionnement du convertisseur 5 qui continue à absorber un courant fourni par le condensateur Xcap. Le convertisseur 5 s'arrête brusquement de fonctionner, donc la décharge de la capacité Xcap également, lorsque la tension à ses bornes descend en dessous d'un certain seuil.

Toutefois, le condensateur Xcap reste chargé à un niveau correspondant à une valeur typiquement entre 100 et 200 volts. En cas de déconnection de la tension Vac alors que le convertisseur 5 est très faiblement chargé, cette tension peut rester égale à la tension secteur au moment de la déconnection (soit entre 0 et 320 volts pour une tension efficace de 230 volts).

Le circuit 9 surveille la tension Vac afin de détecter sa disparition. Par exemple, le circuit 9 détecte une absence d'annulation de la tension aux bornes du condensateur Xcap, ou des bornes 11 et 13, ou des bornes 21 et 23, pendant une durée supérieure à au moins une demi-période, de préférence une à quelques périodes, de la tension Vac.

Dans l'exemple de la figure 4, à un instant t1 qui suit la disparition de la tension Vac d'une durée T, c'est-à-dire après une durée sans annulation de la tension VXcap, le circuit 9 déclenche la génération d'un courant de gâchette dans les deux thyristors. Le thyristor T1 est, dans l'exemple de la figure 4, polarisé en direct et est donc rendu passant. Le thyristor T2 est lui polarisé en inverse mais est traversé par un courant de fuite IA2 négatif. L'amplitude du courant de gâchette conditionne l'amplitude du courant de fuite, donc les vitesse et durée de décharge du condensateur Xcap. Lorsque le condensateur est déchargé (instant t2), la disparition du courant dans le thyristor T1 provoque son blocage. Le circuit 9 détecte une annulation de la tension VXcap aux bornes du condensateur Xcap et arrête la génération des signaux de gâchette des thyristors.

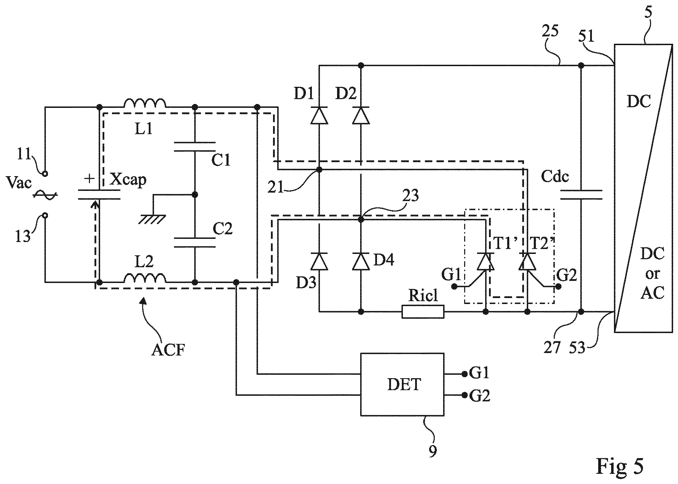

La figure 5 représente, de façon très schématique, un autre mode de réalisation d'un système ou circuit de conversion d'énergie équipé d'une fonction de décharge d'un condensateur alternatif.

Ce mode de réalisation reprend le principe d'un pont redresseur à diodes associé à un demi-pont commandable. Les éléments communs au mode de réalisation de la figure 2 ne sont pas redécrits.

Une différence par rapport au mode de réalisation de la figure 2 est que la résistance Ricl de limitation du courant d'appel est intercalée entre les anodes communes des diodes D3 et D4 et la borne 27. Une autre différence est que le demi-pont commandable est un demi-pont inférieur constitué de deux thyristors T1' et T2' à gâchette d'anode. Les anodes communes des thyristors T1' et T2' sont reliées, de préférence connectées, à la borne 27. La cathode du thyristor T1' est reliée, de préférence connectée, à la borne 23. La cathode du thyristor T2' est reliée, de préférence connectée, à la borne 21. Par rapport à des thyristors à gâchette de cathode, des thyristors à gâchette d'anode sont généralement rendus passants en extrayant un courant de leur gâchette G1 ou G2. Ainsi, le circuit 9 de détection de la disparition de la tension Vac est adapté à tirer un courant sur les gâchettes G1 et G2. En variante, on utilise des thyristors à gâchette d'anode commandables par injection de courant dans leurs gâchettes.

Le fonctionnement du circuit de la figure 5 se déduit du fonctionnement décrit en relation avec les figures précédentes.

Selon un autre mode de réalisation, une résistance de limitation du courant d'appel est prévue en partie haute et en partie basse du circuit, ce qui revient à combiner les modes de réalisation des figures 2 et 5 et à prévoir un pont commandable complet de quatre thyristors en plus d'un pont complet de quatre diodes.

Selon d'autres modes de réalisation, la commande des thyristors est, lors d'une mise sous tension, contrôlée pour un démarrage sans pic de courant. Cela nécessite une commande adaptée des thyristors au démarrage (par angle de phase à retard progressivement réduit), mais cela évite la résistance Ricl.

La figure 6 représente, de façon très schématique, encore un autre mode de réalisation d'un système ou circuit de conversion d'énergie équipé d'une fonction de décharge d'un condensateur alternatif.

Selon ce mode de réalisation, le pont redresseur 3 est seulement constitué d'un pont mixte, comportant un demi-pont supérieur à thyristors T1 et T2 à gâchette de cathode et un demi-pont inférieur à diodes D3 et D4. L'absence de résistance de limitation du courant d'appel au démarrage du système est compensée par une commande particulière des thyristors T1 et T2 afin d'assurer une charge progressive du condensateur Cdc. On tire alors profit de la présence d'un microcontrôleur 8 (MCU) servant à commander (Control) le convertisseur à découpage 5 (DC / DC or AC) pour utiliser ce microcontrôleur afin de générer les signaux de commande des gâchettes G1 et G2.

Le mode de réalisation de la figure 6 illustre une autre variante du point de vu des références des tensions et de la génération de basses tensions continues (par basses tensions, on entend des tensions inférieures à 20 volts, de préférence des tensions de quelques volts) adaptées aux signaux de commande. En particulier, l'injection d'un courant dans les gâchettes de cathode des thyristors T1 et T2 requiert que les cathodes des thyristors soient à un potentiel (GND1) inférieur au potentiel (VDD1) de leurs gâchettes G1 et G2. Par ailleurs, le microcontrôleur 8 est alimenté par une basse tension VDD2, référencée par rapport au potentiel (GND2) de la borne 27. La génération des signaux de commande G1 et G2 de gâchette requiert donc un changement de référence de tension. Pour cela, une sortie I/O du microcontrôleur 8, fournissant un signal numérique d'état (prenant l'un des potentiel VDD2 et 0, aux chutes de tension près dans les transistors de sortie à l'état passant), est appliqué à (l'anode d') une photodiode PD82 d'un optocoupleur 82, le cas échéant par l'intermédiaire d'une résistance RD. Un phototransistor PT82, par exemple bipolaire, de l'optocoupleur 82 a son collecteur relié, de préférence connecté, à une borne de fourniture du potentiel VDD1. L'émetteur du phototransistor PT82 est relié, le cas échéant par l'intermédiaire de résistances RG1 et RG2, aux gâchettes G1 et G2 des thyristors T1 et T2.

Dans l'exemple de la figure 6, les tensions VDD1 et VDD2 sont obtenues par un transformateur 6 dont un premier enroulement ou primaire 61 a une première borne reliée, de préférence connectée, aux cathodes de deux diodes D5 et D6 de redressement dont les anodes sont respectivement reliées, de préférence connectées, aux bornes 11 et 13. L'autre extrémité du premier enroulement 61 est d'une part reliée à sa première extrémité par une diode D7 (anode de la diode D7 côté deuxième extrémité) et d'autre part à la borne 27 (potentiel GND2) par un transistor MOS M. Le transistor M est commandé par un signal fourni par un bloc 63 d'allumage/extinction du système. Un condensateur C62 relie, le cas échéant, la cathode de la diode D7 à la borne 27.

Un (premier) enroulement secondaire 65 du transformateur 6 fournit la tension VDD2 référencée au potentiel GND2. Une première extrémité de l'enroulement 65 est reliée, par l'intermédiaire d'une diode D8 (anode côté première extrémité de l'enroulement 65), à une première borne d'un condensateur C64 fournissant le potentiel VDD2 et dont l'autre borne est reliée, de préférence connectée, à la deuxième extrémité de l'enroulement 65 et à la borne 27 (GND2).

Un (deuxième) enroulement secondaire 67 du transformateur 6 fournit la tension VDD1 référencée au potentiel GND1. Une première extrémité de l'enroulement 67 est reliée, par l'intermédiaire d'une diode D9 (anode côté première extrémité de l'enroulement 67), à une première borne d'un condensateur C66 fournissant le potentiel VDD1 et dont l'autre borne est reliée, de préférence connectée, à la deuxième extrémité de l'enroulement 67 et à la borne 25 (GND1).

Le microcontrôleur 8 reçoit, sur une borne d'entrée-sortie numérique I/O une information ZV indicatrice de la présence ou non de la tension Vac. Cette information binaire ZV indicatrice d'une tension nulle en entrée du système (donc d'une absence de tension Vac) permet à la fois au microcontrôleur 8 de déclencher les thyristors T1 et T2 de façon impulsionnelle au passage par zéro de la tension Vac lorsqu'elle est présente et de commander la décharge du condensateur Xcap en forçant la conduction directe d'un des thyristors et la conduction inverse de l'autre lorsque le signal ZV ne franchit plus le seuil représentatif du niveau zéro de la tension Vac pendant une durée équivalente à au moins une demi période, de préférence à quelques alternances, de la tension Vac. Dans l'exemple de la figure 6, on prévoit une commande simultanée des thyristors T1 et T2 y compris en mode impulsionnel, ce qui n'est pas gênant dans la mesure où les impulsions sont suffisamment courtes pour ne pas engendrer de conduction inverse prolongée du thyristor polarisé en inverse.

Le signal ZV est, par exemple, obtenu à l'aide d'un circuit 4, basé sur un optocoupleur 42. L'anode d'une photodiode PD42 émettrice de l'optocoupleur 42 est reliée, par une ou plusieurs résistances R4, à une des bornes 11 et 13, par exemple la borne 11. La cathode de la diode PD42 est reliée, de préférence connectée, à l'autre borne parmi les bornes 11 et 13 ainsi qu'à sa propre anode par une diode D42. Les résistances R4 abaissent la tension attaquant la photodiode PD42. Un phototransistor PT42 de l'optocoupleur 42 est relié, de préférence connecté, par son émetteur à la borne 27 (masse GND2), et par son collecteur à une résistance R6 dont l'autre borne est reliée, de préférence connectée, à la borne au potentiel VDD2. Le signal ZV est prélevé au point milieu de l'association en série de la résistance R6 et du phototransistor PT42. Tant que la tension entre les bornes 11 et 13 n'est pas nulle, la photodiode PD42 excite le phototransistor PT42, ce qui tire l'état du signal ZV à un état bas, en général inférieur à 2 volts. Quand la tension Vac est nulle (ou à chaque passage par zéro), le transistor PT42 se bloque et le niveau du signal ZV est tiré vers l'état haut (VDD2) via la résistance R6 (résistance de pull-up). Lorsque le niveau ZV ne présente plus de transitions entre les états haut et bas pendant la durée choisie T (figure 4), le microcontrôleur 8 provoque la génération continue des courants de gâchette.

La figure 7 représente, de façon très schématique, encore un autre mode de réalisation d'un système ou circuit de conversion d'énergie équipé d'une fonction de décharge d'un condensateur alternatif.

Par rapport au mode de réalisation de la figure 6, les thyristors T1' et T2' sont des thyristors à gâchette d'anode dans la partie basse du pont 3' en remplacement des diodes D3 et D4. Les thyristors T1 et T2 sont remplacés par les diodes D1 et D2 dans la partie haute du pont 3'. Cela réduit le nombre de basses tensions continues à générer à une seule tension VDD dans la mesure où les signaux de gâchette G1 et G2 peuvent être référencés au même potentiel de référence GND que le microcontrôleur 8. Ainsi, le transformateur 6' peut être simplifié aux deux enroulements 61 et 65, l'enroulement 65 fournissant la basse tension VDD d'alimentation du microcontrôleur 8 et de l'optocoupleur 4. De plus, l'optocoupleur 82 (figure 6) n'est pas nécessaire et la sortie I/O de fourniture des signaux de commande de gâchette peut être directement reliée, de préférence connectée, aux résistances RG1 et RG2. Le reste du circuit de la figure 7 est similaire à celui de la figure 6.

Les modes de réalisation des figures 6 et 7 combinent les avantages d'une décharge du condensateur alternatif via les thyristors à l'utilisation d'un pont mixte pour éviter la résistance de limitation du courant d'appel Ricl. En outre, ils permettent d'utiliser le même microcontrôleur que celui utilisé par le convertisseur à découpage 5 et pour le contrôle des thyristors lors de la phase de démarrage progressif.

Un avantage des modes de réalisation décrits est que leur mise en œuvre ne requiert que la génération d'une commande particulière des thyristors d'un pont mixte.

Un avantage des modes de réalisation décrits est que la décharge du condensateur alternatif Xcap est particulièrement simple et fait appel à des circuits peu complexes.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, la solution présentée pour décharger le condensateur Xcap lors d'une mise hors tension par conduction inverse dans un thyristor est compatible avec tout système usuel, pourvu que le pont redresseur comporte deux thyristors supérieurs et/ou deux thyristors inférieurs, qui se trouve donc en anti-série avec leur électrode commune (anode commune ou cathode commune) reliée à une borne de sortie redressée du pont.

Par ailleurs, bien que l'on ait fait référence à une commande simultanée continue des thyristors T1 et T2 pour assurer la décharge du condensateur Xcap, on pourra prévoir une commande par impulsions simultanées pourvu que la fréquence de ces impulsions soit nettement supérieure, dans un rapport d'au moins 10, à la fréquence de la tension alternative Vac et/ou que la durée de ces impulsions soient suffisante, afin de garantir une conduction inverse du thyristor polarisé en inverse pendant une durée suffisante pour décharger le condensateur Xcap.

En outre, on pourra prévoir que, si la tension d'entrée (entre les bornes 11 et 13), présumée alternative ne devient pas inférieure à un (deuxième) seuil pendant une durée supérieure à un (troisième) seuil, par exemple de quelques centaines de millisecondes à quelques secondes, la commande simultanée des thyristors soit stoppée. Une telle variante permet de différencier l'absence de tension alternative de la présence d'une tension d'entrée continue et de déconnecter le circuit en présence d'une défaillance du secteur ou d'un branchement sur une source d'énergie continue. Cela revient à prévoir une commande simultanée des thyristors T1 et T2 pendant une fenêtre temporelle comprise entre un premier seuil, par exemple de quelques dizaines ou centaines de millisecondes et un troisième seuil, par exemple de quelques centaines de millisecondes ou quelques secondes, supérieur au premier seuil. Le deuxième seuil est lui un seuil de tension et correspond, par exemple à quelques volts.

Enfin, la mise en oeuvre pratique des modes de réalisation et variantes décrits est à la portée de l'homme du métier à partir des indications fonctionnelles données cidessus. En particulier, le choix de la durée de disparition de la tension Vac avant décharge de la capacité Xcap peut varier, pourvu d'être compatible avec la durée maximale requise pour décharger la capacité Xcap, généralement fixée par des normes. Une durée de quelques dizaines de millisecondes à quelques centaines de millisecondes constitue un choix préféré, plus préférentiellement de l'ordre de 40 à 300 ms.

## Revendications

1. Procédé de commande d'un circuit comportant un pont redresseur d'une tension alternative (Vac), le pont redresseur comportant deux thyristors (T1, T2 ; T1', T2' ), et un condensateur alternatif (Xcap) dont les deux électrodes sont respectivement reliées à deux électrodes distinctes des thyristors, **caractérisé par le fait que** le procédé de commande comporte une étape consistant à appliquer simultanément de mêmes courants de gâchette (IG1, IG2) aux deux thyristors pour décharger le condensateur alternatif lorsque le circuit détecte une absence de tension alternative (Vac) aux bornes du condensateur alternatif pendant une durée supérieure à un premier seuil, d'au moins une demi-période de la tension alternative.

2. Circuit comportant un pont redresseur le pont redresseur comportant deux thyristors (T1, T2 ; T1', T2' ), et un condensateur alternatif (Xcap) dont les deux électrodes sont respectivement reliées à deux électrodes distinctes des thyristors, **caractérisé par le fait que** le circuit comporte également un circuit de commande (9, 8) adapté à appliquer simultanément de mêmes courants de gâchette (IG1, IG2) aux deux thyristors pour décharger le condensateur alternatif lorsque le circuit détecte une absence de tension alternative (Vac) aux bornes du condensateur alternatif pendant une durée supérieure à un premier seuil, d'au moins une demi-période de la tension alternative.

3. Procédé selon la revendication 1, ou circuit selon la revendication 2, dans lequel les deux thyristors sont en anti-série en étant interconnectés par une électrode de même nature.

4. Procédé selon la revendication 1 ou 3, dans lequel un des thyristors (T1, T2 ; T1', T2') conduit en inverse pendant l'application desdits courants de gâchette (IG1, IG2).

5. Procédé selon l'une quelconque des revendications 1, 3 et 4, dans lequel lesdits courants cessent d'être appliqués si le circuit ne détecte pas qu'une tension d'entrée devient inférieure à un deuxième seuil pendant une durée supérieure à un troisième seuil, ledit troisième seuil étant supérieur au premier.

6. Circuit selon l'une quelconque des revendications 2 et 3, adapté à cesser d'appliquer lesdits courants s'il ne détecte pas qu'une tension d'entrée devient inférieure à un deuxième seuil pendant une durée supérieure à un troisième seuil, ledit troisième seuil étant supérieur au premier.

7. Procédé selon l'une quelconque des revendications 1, 3 à 5, dans lequel lesdits courants de gâchette (IG1, IG2) sont appliqués pendant une durée (T) supérieure à celle d'une demi-période de la tension alternative (Vac) appliquée aux deux électrodes du condensateur (Xcap).

8. Procédé selon la revendication 7, dans lequel lesdits courants de gâchette (IG1, IG2) sont appliqués pendant une durée de quelques dizaines de millisecondes à quelques centaines de millisecondes.

9. Procédé selon la revendication 7 ou 8, dans lequel lesdits courants de gâchette (IG1, IG2) sont appliqués de manière continue.

10. Procédé selon la revendication 7 ou 8, dans lequel lesdits courants de gâchette (IG1, IG2) sont appliqués par impulsions de durée suffisante pour garantir une conduction inverse du thyristor polarisé en inverse pendant une durée suffisante pour décharger le condensateur.

11. Procédé selon l'une quelconque des revendications 1, 3 à 5, 7 à 10, ou circuit selon l'une quelconque des revendications 2 , 3 et 6, dans lequel lesdits thyristors (T1, T2 ; T1', T2') sont commandés à partir d'un circuit (9, 4) de détection d'absence de tension entre des bornes (11, 13) d'application de la tension alternative (Vac).

12. Procédé selon l'une quelconque des revendications 1, 3 à 5, 7 à 11, ou circuit selon l'une quelconque des revendications 2 , 3, 6, 11, dans lequel, en présence de la tension alternative (Vac), les thyristors (T1, T2 ; T1', T2') sont commandés de façon impulsionnelle pour redresser la tension alternative.

13. Procédé selon la revendication 12, dans lequel les thyristors (T1, T2 ; T1', T2') reçoivent une impulsion de commande simultanée à chaque alternance de la tension alternative (Vac).

14. Procédé selon la revendication 13, dans lequel les thyristors (T1, T2 ; T1', T2') reçoivent chacun une impulsion de commande une alternance sur deux de la tension alternative (Vac).

15. Procédé selon l'une quelconque des revendications 1, 3 à 5, 7 à 14, dans lequel une sortie du pont (3, 3) alimente une alimentation à découpage (5), lesdits courants de gâchette (IG1, IG2) étant générés sous commande du circuit de commande (8) de l'alimentation à découpage.

16. Procédé selon l'une quelconque des revendications 1, 3 à 5, 7 à 15, ou circuit selon l'une quelconque des revendications 2 , 3, 6, 11, 12, dans lequel les thyristors sont des thyristors à gâchette de cathode (T1, T2).

17. Procédé selon l'une quelconque des revendications 1, 3 à 5, 7 à 15, ou circuit selon l'une quelconque des revendications 2, 3, 6, 11, 12, dans lequel les thyristors sont des thyristors à gâchette d'anode (T1', T2').

## Patentansprüche

1. Verfahren zur Steuerung einer Schaltung, die eine Brücke zum Gleichrichten einer Wechselspannung (Vac) aufweist, wobei die Gleichrichterbrücke zwei Thyristoren (T1, T2; T1', T2') und einen Wechselstromkondensator (Xcap) aufweist, dessen zwei Elektroden jeweils mit zwei verschiedenen Elektroden der Thyristoren gekoppelt sind, **dadurch gekennzeichnet, dass** das Steuerverfahren einen Schritt aufweist, der darin besteht, gleichzeitig gleiche Gate-Ströme (IG1, IG2) an die beiden Thyristoren anzulegen, um den Wechselstromkondensator zu entladen, wenn die Schaltung das Fehlen einer Wechselspannung (Vac) über dem Wechselstromkondensator für eine Dauer detektiert, die länger als ein erster Schwellenwert von wenigstens einer halben Periode der Wechselspannung ist.

2. Schaltkreis, der eine Gleichrichterbrücke aufweist, wobei die Gleichrichterbrücke zwei Thyristoren (T1, T2; T1', T2') und einen Wechselstromkondensator (Xcap) aufweist, dessen zwei Elektroden jeweils mit zwei verschiedenen Elektroden der Thyristoren gekoppelt sind, **dadurch gekennzeichnet, dass** die Schaltung außerdem eine Steuerschaltung (9, 8) aufweist, die angepasst ist zum gleichzeitigen Anlegen gleicher Gate-Ströme (IG1, IG2) an die zwei Thyristoren, um den Wechselstromkondensator zu entladen, wenn die Schaltung das Fehlen einer Wechselspannung (Vac) über dem Wechselstromkondensator für eine Dauer detektiert, die länger als ein erster Schwellenwert, von wenigstens einer halben Periode der Wechselspannung ist.

3. Verfahren nach Anspruch 1 oder Schaltkreis nach Anspruch 2, wobei die beiden Thyristoren durch eine gleichartige Elektrode gegenläufig miteinander verbunden sind.

4. Verfahren nach Anspruch 1 oder 3, bei dem einer der Thyristoren (T1, T2; T1', T2') während des Anlegens der Gate-Ströme (IG1, IG2) in Sperr-Richtung leitend ist.

5. Verfahren nach einem der Ansprüche 1, 3 und 4, bei dem die Ströme aufhören, angelegt zu werden, wenn die Schaltung nicht detektiert, dass eine Eingangsspannung für eine Dauer, die länger als ein dritter Schwellenwert ist, kleiner als ein zweiter Schwellenwert wird, wobei der dritte Schwellenwert größer als der erste ist.

6. Schaltkreis nach einem der Ansprüche 2 und 3, die angepasst ist, zum Stoppen des Anlegens der Ströme, wenn er nicht detektiert, dass eine Eingangsspannung für eine Dauer, die länger als ein dritter Schwellenwert ist, kleiner als ein zweiter Schwellenwert wird, wobei der dritte Schwellenwert größer als der erste ist.

7. Verfahren nach einem der Ansprüche 1, 3 bis 5, wobei die Gate-Ströme (IG1, IG2) für eine Dauer (T) angelegt werden, die länger ist als eine halbe Periode der Wechselspannung (Vac), die an die beiden Elektroden des Kondensators (Xcap) angelegt wird.

8. Verfahren nach Anspruch 7, wobei die Gate-Ströme (IG1, IG2) für eine Dauer von einigen zehn Millisekunden bis zu einigen hundert Millisekunden angelegt werden.

9. Verfahren nach Anspruch 7 oder 8, wobei die Gate-Ströme (IG1, IG2) kontinuierlich angelegt werden.

10. Verfahren nach Anspruch 7 oder 8, bei dem die Gate-Ströme (IG1, IG2) in Impulsen mit einer ausreichenden Dauer angelegt werden, um eine umgekehrte Leitung des in Sperrrichtung vorgespannten Thyristors für eine Dauer zu gewährleisten, die ausreicht, um den Kondensator zu entladen.

11. Verfahren nach einem der Ansprüche 1, 3 bis 5, 7 bis 10 oder Schaltkreis nach einem der Ansprüche 2, 3 und 6, **dadurch gekennzeichnet, dass** die Thyristoren (T1, T2; T1', T2') von einem Schaltkreis (9, 4) zum Detektieren des Fehlens einer Spannung zwischen Anschlüssen (11, 13) zum Anlegen der Wechselspannung (Vac) gesteuert werden.

12. Verfahren nach einem der Ansprüche 1, 3 bis 5, 7 bis 11 oder Schaltkreis nach einem der Ansprüche 2, 3, 6, 11, wobei bei Vorhandensein der Wechselspannung (Vac) die Thyristoren (T1, T2; T1', T2') mit Impulsen zum Gleichrichten der Wechselspannung gesteuert werden.

13. Verfahren nach Anspruch 12, wobei die Thyristoren (T1, T2; T1', T2') für jede Halbwelle der Wechselspannung (Vac) einen gleichzeitigen Steuerimpuls erhalten.

14. Verfahren nach Anspruch 13, bei dem die Thyristoren (T1, T2; T1', T2') jeweils einen Steuerimpuls für eine von zwei Halbwellen der Wechselspannung (Vac) erhalten.

15. Verfahren nach einem der Ansprüche 1, 3 bis 5, 7 bis 14, bei dem ein Ausgang der Brücke (3, 3) eine schaltbare Stromversorgung (5) speist, wobei die Gate-Ströme (IG1, IG2) unter Steuerung eines Schaltkreises (8) zur Steuerung der schaltbaren Stromversorgung erzeugt werden.

16. Verfahren nach einem der Ansprüche 1, 3 bis 5, 7 bis 15 oder Schaltkreis nach einem der Ansprüche 2, 3, 6, 11, 12, wobei die Thyristoren Kathoden-Gate-Thyristoren (T1, T2) sind.

17. Verfahren nach einem der Ansprüche 1, 3 bis 5, 7 bis 15 oder Schaltkreis nach einem der Ansprüche 2, 3, 6, 11, 12, wobei die Thyristoren Anoden-Gate-Thyristoren (T1', T2') sind.

## Claims

1. Method of controlling a circuit comprising a bridge for rectifying an AC voltage (Vac), the rectifying bridge comprising two thyristors (T1, T2; T1', T2'), and an AC capacitor (Xcap) having its two electrodes respectively coupled to two distinct electrodes of the thyristors, **characterized by** the fact that the control method comprises a step consisting of simultaneously applying same gate currents (IG1, IG2) to the two thyristors to discharge the AC capacitor when the circuit detects the absence of an AC voltage (Vac) across the AC capacitor for a duration longer than a first threshold, of at least one half-period of the AC voltage.

2. Circuit comprising a rectifying bridge, the rectifying bridge comprising two thyristors (T1, T2; T1', T2'), and an AC capacitor (Xcap) having its two electrodes respectively coupled to two distinct electrodes of the thyristors, **characterized by** the fact that the circuit also comprises a control circuit (9, 8) adapted to simultaneously applying same gate currents (IG1, IG2) to the two thyristors to discharge the AC capacitor when the circuit detects the absence of an AC voltage (Vac) across the AC capacitor for a duration longer than a first threshold, of at least one half-period of the AC voltage.

3. Method according to claim 1, or circuit according to claim 2, wherein the two thyristors are in anti-series by being interconnected by an electrode of same nature.

4. Method according to claim 1 or 3, wherein one of the thyristors (T1, T2; T1', T2') conducts in the reverse direction during the application of said gate currents (IG1, IG2).

5. Method according to any of claims 1, 3, and 4, wherein said currents stop being applied if the circuit does not detect that an input voltage becomes smaller than a second threshold for a duration longer than a third threshold, said third threshold being greater than the first one.

6. Circuit according to any of claims 2 and 3, adapted to stopping applying said currents if it does not detect that an input voltage becomes smaller than a second threshold for a duration longer than a third threshold, said third threshold being greater than the first one.

7. Method according to any of claims 1, 3 to 5, wherein said gate currents (IG1, IG2) are applied for a duration (T) longer than that of a half-period of the AC voltage (Vac) applied to the two electrodes of the capacitor (Xcap).

8. Method according to claim 7, wherein said gate currents (IG1, IG2) are applied for a duration of from a few tens of milliseconds to a few hundreds of milliseconds.

9. Method according to claim 7 or 8, wherein said gate currents (IG1, IG2) are applied in continuous fashion.

10. Method according to claim 7 or 8, wherein said gate currents (IG1, IG2) are applied in pulses having a sufficient duration to guarantee a reverse conduction of the reverse-biased thyristor for a duration sufficient to discharge the capacitor.

11. Method according to any of claims 1, 3 to 5, 7 to 10, or circuit according to any of claims 2, 3, and 6, wherein said thyristors (T1, T2; T1', T2') are controlled from a circuit (9, 4) of detection of the absence of a voltage between terminals (11, 13) of application of the AC voltage (Vac).

12. Method according to any of claims 1, 3 to 5, 7 to 11, or circuit according to any of claims 2, 3, 6, 11, wherein, in the presence of the AC voltage (Vac), the thyristors (T1, T2; T1', T2') are controlled with pulses to rectify the AC voltage.

13. Method according to claim 12, wherein the thyristors (T1, T2; T1', T2') receive a simultaneous control pulse for each halfwave of the AC voltage (Vac).

14. Method according to claim 13, wherein the thyristors (T1, T2; T1', T2') each receive a control pulse one halfwave out of two of the AC voltage (Vac).

15. Method according to any of claims 1, 3 to 5, 7 to 14, wherein an output of the bridge (3, 3) powers a switched-mode power supply (5), said gate currents (IG1, IG2) being generated under control of a circuit (8) for controlling the switched-mode power supply.

16. Method according to any of claims 1, 3 to 5, 7 to 15, or circuit according to any of claims 2, 3, 6, 11, 12, wherein the thyristors are cathode-gate thyristors (T1, T2).

17. Method according to any of claims 1, 3 to 5, 7 to 15, or circuit according to any of claims 2, 3, 6, 11, 12, wherein the thyristors are anode-gate thyristors (T1', T2').
